# EUROPEAN PATENT APPLICATION

(11) **EP 4 213 367 A1**
(43) Date of publication of application: **19.07.2023**
(21) Application number: 22215720.8
(22) Date of filing: 21.12.2022
(51) Int. Cl.: H02N 1/04

(54) **FIBER BASED TRIBOELECTRIC TEXTILE STRUCTURE AND METHOD FOR MANUFACTURING ENERGY GENERATOR AND SENSOR**

(30) Priority: 17.01.2022 AT 600132022
(71) Applicant: V-Trion GmbH, 6890 Lustenau (AT); Grabher Group, 6890 Lustenau (AT)
(72) Inventor: Hossain, Gaffar, 6845 Hohenems (AT); Grabher, Günter, 6890 Lustenau (AT)
(74) Representative: Schwarz & Partner Patentanwälte GmbH

(57) **Abstract**

The invention relates to a bicomponent structure for a smart textile energy harvester comprising: an electrically conductive yarn or thread (1), and at least one nonconductive or triboelectric yarn or thread (2), wherein the at least one nonconductive or triboelectric yarn or thread (2) partially or completely covers the electrically conductive yarn or thread (1), wherein the at least one nonconductive or triboelectric yarn or thread (2) and the electrically conductive yarn or thread (1) are attached to a supporting fabric (3) or the at least one nonconductive or triboelectric yarn or thread (2) is wrapped around the electrically conductive yarn or thread (1).

## Description

The present invention relates to a bicomponent structure for a smart textile energy harvester comprising an electrically conductive yarn or thread and at least one nonconductive or triboelectric yarn or thread, a method for manufacturing a bicomponent structure for a smart textile energy harvester and a self-powered sensor comprising the bicomponent structure.

### Background of the invention

Wearable electronics are very much limited by the power supply system required for the operation of the sensor and electronics. As we know, most of the sensors used today are passive, which do not give out any signal if there is no power supply from the battery. However, all existing commercial power supplies based on lithium-ion batteries have several problems. They are heavy, not flexible, nonbreathable, not washable, take lots of space and require a periodic recharge or replacement. Therefore, there is a need for an energy autonomous power solution to this problem, to provide power to the sensor and wearable electronic devices.

A solution to this problem is for example given in EP 3 910 784 A1, where a triboelectric smart textile composite for energy harvesting is disclosed. With this textile composite power generation is possible due to the triboelectric principle. Triboelectricity is a charge of electricity generated by friction. The underlying phenomenon - the triboelectric effect - is electricity generation through electrostatic induction. When two different materials repeatedly touch each other, electrons shift causing opposite charges to build up on the two surfaces producing an electric charge. In other words, the textile generates electricity from mechanical action such as movement, deformation, vibration or pressure, while the user is moving. As the person wearing such garments moves, the vibrations they create can be harvested and for example channelled into recharging a battery or powering plug-in electronic device or devices. The device may be used to store and provide energy over a continuous period and can be charged by plugging into an electrical power point or through vibration energy harvesting. The triboelectric textile composite disclosed in EP 3 910 784 A1 is based on conductive and triboelectric fabrics, which are woven, knitted, embroidered, etc. For manufacturing of these fabrics special machines must be used, depending on the structure of the fabrics. Further, the fabric structure of EP 3 910 784 A1 does not allow to create a triboelectric textile composite having any possible structure.

### Short description of the invention

The object of the present invention is to improve wearable electronics by providing a triboelectric textile structure which can be easily manufactured with all existing machineries and infrastructures, is light-weight, flexible, breathable, washable and can have any structure and thus, can be easily integrated into any textile.

A solution to the above mentioned problem is provided by a bicomponent structure for a smart textile energy harvester comprising:
- an electrically conductive yarn or thread,
- and at least one nonconductive or triboelectric yarn or thread,
wherein the at least one nonconductive or triboelectric yarn or thread partially or completely covers the electrically conductive yarn or thread,
wherein the at least one nonconductive or triboelectric yarn or thread and the electrically conductive yarn or thread are attached to a supporting fabric or the at least one nonconductive or triboelectric yarn or thread is wrapped around the electrically conductive yarn or thread.

The inventive bicomponent structure can generate voltage, current, charges etc. and can be used as a energy generator and an energy autonomous power supply for wearable electronics. Via the triboelectric effect, the bicomponent structure generates energy when it encounters other textile or non-textile surfaces by touching, tapping, contacting, friction, movement with body parts etc.

In a preferred embodiment the electrically conductive yarn or thread and the at least one nonconductive or triboelectric yarn or thread are stitched to the supporting fabric. Thus, the bicomponent structure is very robust on the one hand and very easy to manufacture on the other hand. For example, the Tailor fibre placement technique may be used to manufacture the bicomponent structure. Using this technique, the conductive yarn or thread can be stitched in any possible pattern on the supporting fabric via the at least one nonconductive or triboelectric yarn or thread. Tailor fiber placement can be used to design and make a structure with a minimum wastage of material, that is fibre, and a thicker diameter of yarn or thread than in other methods can be used. The resulting bicomponent structure is highly stress adaptive and thus, very robust. Hence, it is very useful for wearable electronics.

In another embodiment the electrically conductive yarn or thread and the at least one nonconductive or triboelectric yarn or thread are knitted or embroidered to the supporting fabric. Also in this embodiment the resulting fabric is robust and it is easy to produce the bicomponent structure. Especially, embroidered or knitted structures can be used if more compact structures are needed, for which also the surface of the nonconductive or triboelectric yarn or thread is increased and thus, also the triboelectric effect can be increased.

Further, the at least one nonconductive or triboelectric yarn or thread may be braided around the electrically conductive yarn or thread. The latter may be partially or completely wrapped by the nonconductive or triboelectric yarn or thread, depending on the application of the bicomponent structure. For example, if the bicomponent structure has to be very robust, the at least one nonconductive or triboelectric yarn or thread may be completely wrapped around the electrically conductive yarn or thread, e.g. like the cover of a rope or a tube. But any other braiding technique is also possible to produce the triboelectric bicomponent structure.

The braided structure may be attached to a supporting surface, but it can be also used on its own. It has the advantage, that it gives more freedom in the usage of a triboelectric sensor or generator comprising such a braided structure, as it can be applied in any way on a surface or similar. Especially, for wearable electronics and smart-textile sensors, where twisting, stretching or applied pressure are available, these braided structures are very advantageous.

Moreover, the electrically conductive yarn or thread can be out of the group of metal threads comprising silver, copper, stainless steel, carbon or carbon nanotube coated threads.

Further, the at least one nonconductive or triboelectric yarn or thread can be out of the group of natural or synthetic fibers comprising wool, cotton, silk, Polyester (PES), Polyamide (PA), Polytetrafluoroethylene (PTFE), Nylon, Polyacrylonitrile (PAN) and Polyurethane (PU).

The invention also relates to self-powered sensor comprising an inventive bicomponent structure. Most of the sensors used today are passive, which do not give out any signal if there is no power supply from the battery. Thus, the self-powered sensors provide a big advantage, in cases where power supply from an external battery is an obstacle, as the battery is a solid device, may not be rechargeable, is not flexible, wearable, or washable etc.

The big advantages of this triboelectric sensor are the simplicity of the possible manufacturing methods in structure or device formation by commonly used stitching or embroidery machines in a one step method. Moreover, the sensor can be easily integrated into other wearables, allows for a miniaturization of self-powered sensors and is an energy autonomous power solution.

Moreover, a solution to the above stated problem is also given by a method for manufacturing a bicomponent structure for a smart textile energy harvester comprising the steps
- Providing an electrically conductive yarn or thread and at least one nonconductive or triboelectric yarn or thread,
- Either attaching the electrically conductive yarn or thread and the at least one nonconductive or triboelectric yarn or thread on a supporting fabric, such that the at least one nonconductive or triboelectric yarn or thread covers the electrically conductive yarn or thread partially or fully,
or wrapping the at least one nonconductive or triboelectric yarn or thread partially or fully around the electrically conductive yarn or thread.

In one embodiment a Tailor fiber placement technique is used to attach the electrically conductive yarn or thread to the supporting fabric with the at least one nonconductive or triboelectric yarn or thread.

In another embodiment an embroidery or knitting technique is used to attach the electrically conductive yarn or thread to the supporting fabric with the at least one nonconductive or triboelectric yarn or thread.

Further, a braiding technique may be used for wrapping the at least one nonconductive or triboelectric yarn or thread around the electrically conductive yarn or thread.

The above described methods can be used with all existing machineries and infrastructures and are also easy industrially scalable methods.

### Detailed description and preferred embodiments

The foregoing and other objects, features and advantages of the invention will become more apparent from the following detailed description, which proceeds with reference to the accompanying figures.
Fig. 1 shows an illustrative example of a tailor fibre placement technique for the formation of the bicomponent structure.
Fig. 2a and 2b show examples of tailor fibred structures on a supporting fabric.
Fig. 3a and 3b show an example of an embroidered or knitted bicomponent structure on a supporting fabric.
Fig. 4a to 4e show different braiding techniques for the formation of a bicomponent structure.

As illustrated in the figures the bicomponent structure for a smart textile energy harvester according to the invention comprises an electrically conductive yarn or thread 1 and at least one nonconductive or triboelectric yarn or thread 2. The at least one nonconductive or triboelectric yarn or thread 2 partially or completely covers the electrically conductive yarn or thread 1. Thus, the bicomponent structure can generate energy when it encounters other textile or non-textile surfaces by touching, tapping, contacting, friction, movement with body parts etc. Via the triboelectric effect a potential difference can be created by friction, touch, pressure, or contact. A triboelectric yarn or thread 2 may have a higher electrical positivity or negativity than a nonconductive yarn or thread 2, which certainly also shows a triboelectric effect with the electrically conductive yarn or thread 1. Thus, for a triboelectric yarn or thread 2 the energy conversion efficiency may be higher. Depending on the respective field of application, a nonconductive or triboelectric yarn or thread 2 may be used.

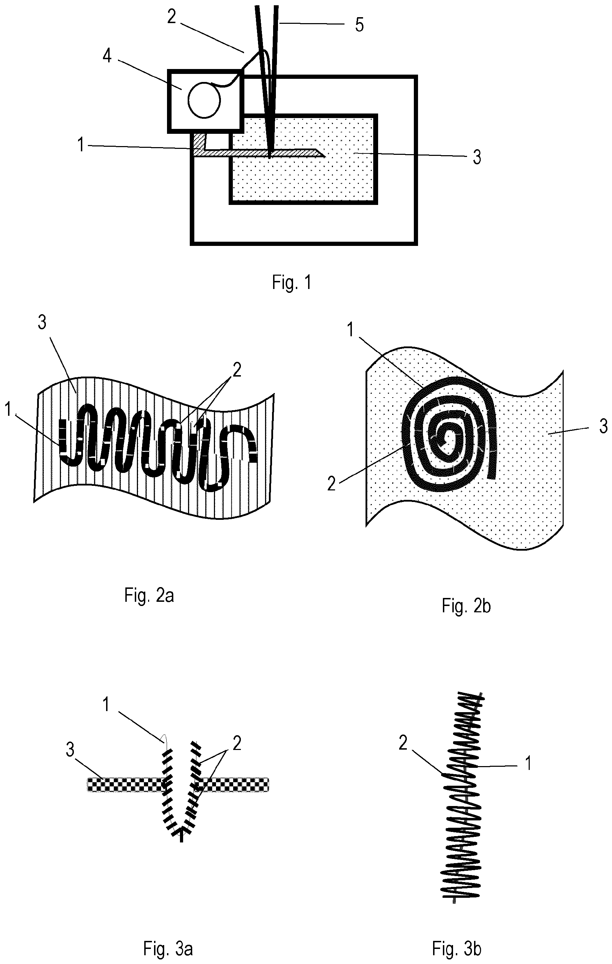

As can be seen in Fig. 1, 2a and 2b the at least one nonconductive or triboelectric yarn or thread 2 and the electrically conductive yarn or thread 1 may be attached to a supporting fabric 3. The supporting fabric 3 may be any material and may have any form and structure, depending on the respective field of application. If the bicomponent structure is supposed to be integrated into wearables, the supporting fabric 3 may be a textile, e.g. part of a sock, a jacket etc.

There are several possibilities to attach the conductive yarn or thread 1 and the nonconductive or triboelectric yarn or thread 2 to the supporting fabric 3. In a certain embodiment, the electrically conductive yarn or thread 1 and the at least one nonconductive or triboelectric yarn or thread 2 are stitched to the supporting fabric 3. In Fig. 1 a schematic example of manufacturing the bicomponent structure by tailor fibre placement is shown. Using this technique, the conductive yarn or thread 1 can be stitched in any possible pattern on the supporting fabric 3 via the at least one nonconductive or triboelectric yarn or thread 2. Examples of patterns are shown in Fig. 2a and 2b. For Tailor fibre placement a needle 5 stitches the top thread delivered by the thread spool 4, which is the nonconductive or triboelectric yarn or thread 2, onto the supporting fabric 3, thereby fixing the bottom thread, which is the conductive yarn or thread 1, onto the supporting fabric 3. The advantage of this technique is that in manufacturing the bicomponent structure a thicker diameter can be used for the conductive yarn or thread 1 than in other methods. Further, a minimum wastage of material can be achieved. The resulting bicomponent structure is highly stress adaptive and thus, very robust. Hence, it is very useful for wearable electronics.

In another embodiment the electrically conductive yarn or thread 1 and the at least one nonconductive or triboelectric yarn or thread 2 are knitted or embroidered to the supporting fabric 3. Examples are shown in Fig. 3a and 3b, where again the bottom yarn is the conductive yarn or thread 1 and the top yarn is the nonconductive or triboelectric yarn or thread 2 and both are attached to a supporting fabric 3. Via this technique it is for example possible to create, e.g. for wearable electronics, a conductive inner surface and a triboelectric outer surface, by using the conductive thread or yarn 1 as a front yarn and the nonconductive or triboelectric yarn or thread 2 as a shuttle yarn. Embroidered or knitted bicomponent structures can be used if more compact structures are needed, for which also the surface of the nonconductive or triboelectric yarn or thread 2 is increased as can be seen e.g. in Fig. 3b. Thus, for these bicomponent structures also the triboelectric effect can be increased.

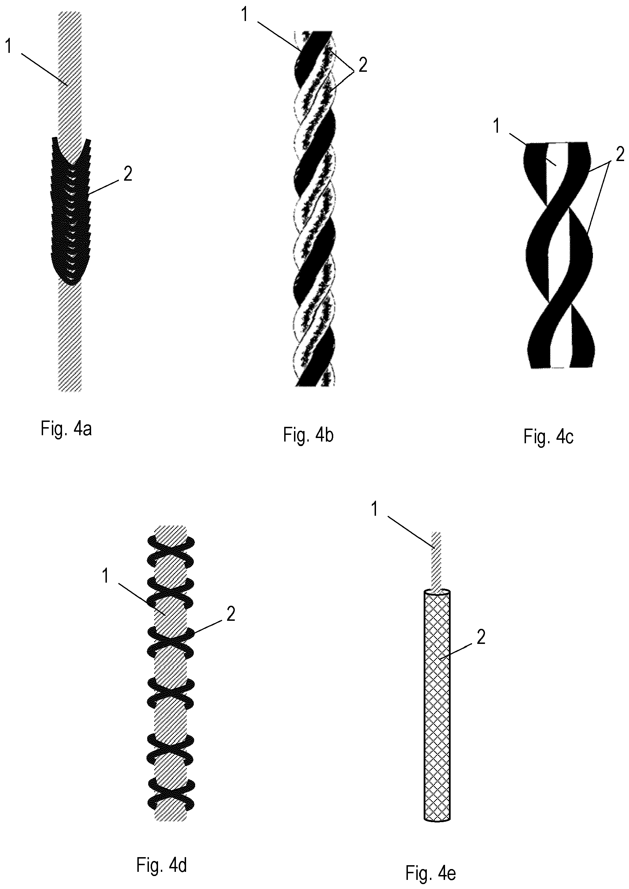

As illustrated in Fig. 4a - 4e the at least one nonconductive or triboelectric yarn or thread 2 may also be wrapped around the electrically conductive yarn or thread 1, without being attached to a supporting fabric. Preferably, the at least one nonconductive or triboelectric yarn or thread 2 is braided around the electrically conductive yarn or thread 1. In Fig. 4a the at least one nonconductive or triboelectric yarn or thread 2 is wrapped around the conductive yarn or thread 1, in Fig. 4b to 4d different methods of braiding the at least one nonconductive or triboelectric yarn or thread 2 around the conductive yarn or thread 1 are shown and in Fig. 4e a tube-like structure is shown, where the at least one nonconductive or triboelectric yarn or thread 2 forms a tube around the conductive yarn or thread 1. These bicomponent structures can be used as individual thread like structures and work independently as energy harvesters and sensors. However, they can also be attached or integrated in supporting textile surfaces, e.g. clothing.

Summarizing, the inventive bicomponent structure may be obtained by stitching, knitting, embroidery, Tailor fibre placement, or braiding techniques of individual conductive yarns or threads 1. Thus, not a whole conductive fabric has to be coated with triboelectric material or a conductive (embroidery) surface must be covered by stitching with a nonconductive yarn/fiber (embroidery) to obtain a similar effect.

The fibre based triboelectric sensors or harvesters comprising an inventive bicomponent structure give a wide verity of application scope and are particularly easy to manufacture using all existing machineries and infrastructures. Any structure can be created by using e.g. stitching, knitting, embroidery, Tailor fiber placement or braiding technique. Further, in contrast to double electrode based triboelectric sensors and harvester comprising two conductive fabric layers the inventive bicomponent structure does not require any gap between the threads. Thus, also an easy industrially scalable manufacturing method for the bicomponent structure is provided.

## Claims

1. Bicomponent structure for a smart textile energy harvester comprising:
- an electrically conductive yarn or thread (1),
- and at least one nonconductive or triboelectric yarn or thread (2),
wherein the at least one nonconductive or triboelectric yarn or thread (2) partially or completely covers the electrically conductive yarn or thread (1),
wherein the at least one nonconductive or triboelectric yarn or thread (2) and the electrically conductive yarn or thread (1) are attached to a supporting fabric (3) or the at least one nonconductive or triboelectric yarn or thread (2) is wrapped around the electrically conductive yarn or thread (1).

2. Bicomponent structure according to claim 1, wherein the electrically conductive yarn or thread (1) and the at least one nonconductive or triboelectric yarn or thread (2) are stitched to the supporting fabric (3).

3. Bicomponent structure according to any of the claims, wherein the electrically conductive yarn or thread (1) and the at least one nonconductive or triboelectric yarn or thread (2) are knitted or embroidered to the supporting fabric (3).

4. Bicomponent structure according to any of the claims, wherein the at least one nonconductive or triboelectric yarn or thread (2) is braided around the electrically conductive yarn or thread (1).

5. Bicomponent structure according to any of the claims, wherein the electrically conductive yarn or thread (1) is out of the group of metal threads comprising silver, copper, stainless steel, carbon or carbon nanotube coated threads.

6. Bicomponent structure according to any of the claims, wherein the at least one nonconductive or triboelectric yarn or thread (2) is out of the group of natural or synthetic fibers comprising wool, cotton, silk, Polyester (PES), Polyamide (PA), Polytetrafluoroethylene (PTFE), Nylon, Polyacrylonitrile (PAN) and Polyurethane (PU).

7. Self-powered sensor comprising a bicomponent structure according to any of the claim 1 to 6.

8. Method for manufacturing a bicomponent structure for a smart textile energy harvester comprising the steps
• Providing an electrically conductive yarn or thread (1) and at least one nonconductive or triboelectric yarn or thread (2),
• Either attaching the electrically conductive yarn or thread (1) and the at least one nonconductive or triboelectric yarn or thread (2) on a supporting fabric (3), such that the at least one nonconductive or triboelectric yarn or thread (2) covers the electrically conductive yarn or thread (1) partially or fully,
or wrapping the at least one nonconductive or triboelectric yarn or thread (2) partially or fully around the electrically conductive yarn or thread (1).

9. Method according to claim 8, wherein a Tailor fiber placement technique is used to attach the electrically conductive yarn or thread (1) to the supporting fabric (3) with the at least one nonconductive or triboelectric yarn or thread (2).

10. Method according to claim 8, wherein a embroidery or knitting technique is used to attach the electrically conductive yarn or thread (1) to the supporting fabric (3) with the at least one nonconductive or triboelectric yarn or thread (2).

11. Method according to claim 8, wherein a braiding technique is used for wrapping the at least one nonconductive or triboelectric yarn or thread (2) around the electrically conductive yarn or thread (1).
